# EUROPÄISCHE PATENTANMELDUNG

(11) **EP 1 162 560 A2**
(43) Veröffentlichungstag der Anmeldung: **12.12.2001**
(21) Anmeldenummer: 01112587.9
(22) Anmeldetag: 23.05.2001
(51) Int. Cl.: G06F 17/60

(54) **Elektronischer Terminplaner**

(30) Priorität: 09.06.2000 DE 10028659
(71) Anmelder: NOKIA MOBILE PHONES LTD., 02150 Espoo (FI)
(72) Erfinder: Baur, Reinhold, 89233 Neu-Ulm (DE); Valtonen, Tero, 24100 Salo (FI); Keinonen, Turkka, 03150 Huhmarl (FI); Koppinen, Anne, 33100 Tampere (FI); Kirjavainen, Anne, 02100 Espoo (FI); Roque-Cerna, Maximiliano, 89312 Günzburg (DE); Lehn, Karsten, 59174 Kamen (DE); Pazina, Markus, 44789 Bochum (DE); Theimer, Wolfgang, 44807 Bochum (DE); Kespohl, Klaus, 44809 Bochum (DE); Buth, Peter, 44795 Bochum (DE); Conrady, Cordula, 47495 Rheinberg (DE); Rastuttis, Stephan, 51147 Köln (DE); Fuhrmann, Thomas, 48249 Dülmen/Bulden (DE); Asikainen, Minna, 33710 Tampere (FI)
(74) Vertreter: TER MEER STEINMEISTER & PARTNER GbR

(57) **Zusammenfassung**

Elektronischer Terminplaner (10) mit einem Kalendarium (11), in welchem Termine mindestens nach Datum, Uhrzeit und einer Individualbezeichnung, zum Beispiel einer zu besuchenden Person, einstellbar sind. Ist der Terminplaner (10) mit einer Schnittstelle (22) versehen, die mit einer an einem anderen Gerät (21) vorhandenen Schnittstelle (22) bezüglich der Termine in Datenaustausch treten kann, können die in das Kalendarium (11) eingetragenen Daten zum Betrieb des anderen Geräts herangezogen oder durch das andere Gerät der elektronische Terminplaner (10) gesteuert werden. So lassen sich zum Beispiel im Kalendarium (11) eingetragene Daten von einem Navigationssystem zur schnelleren Zieleingabe verwenden, oder es können zum Beispiel Abreisetermine durch das andere Gerät in Abhängigkeit vom Verkehr oder anderen Situationen verändert werden.

## Beschreibung

Die Erfindung betrifft einen elektronischen Terminplaner gemäß dem Oberbegriff des Patentanspruchs 1.

Im Stand der Technik sind bereits elektronische Terminplaner bekannt, die der Organisation des privaten und/oder beruflichen Alltags dienen. Diese Terminplaner zeichnen sich dadurch aus, daß sie über eine Mehrzahl von verschiedenen Spalten verfügen, in denen die verschiedenen zu einem Termin abgelegten Daten gespeichert und dem Benutzer später angezeigt werden. Gemäß einer minimalen Konfiguration können beispielsweise eine Datum-, eine Uhrzeit- und eine Namensspalte vorgesehen sein. In aller Regel sind die Terminplaner auch so ausgebildet, daß beispielsweise eine doppelte Verplanung von Zeiträumen ausgeschlossen ist.

Der Erfindung liegt die Aufgabe zugrunde, einen elektronischen Terminplaner der eingangs genannten Art so weiterzubilden, daß eine Kommunikation zwischen ihm und einem anderen Gerät möglich ist.

Die Lösung der gestellten Aufgabe ist im kennzeichnenden Teil des Patentsanspruchs 1 angegeben. Vorteilhafte Ausgestaltungen der Erfindung sind den Unteransprüchen zu entnehmen.

Ein elektronischer Terminplaner nach der Erfindung zeichnet sich dadurch aus, daß er mit einer Schnittstelle versehen ist, die mit einer an einem anderen Gerät vorhandenen Schnittstelle bezüglich der Termindaten in Datenaustausch steht.

Mit dem elektronischen Terminplaner ist es somit möglich, daß die in seinem Kalendarium gespeicherten Termindaten zum Betrieb eines anderen Geräts herangezogen werden können, oder daß der elektronische Terminplaner durch das andere Gerät gesteuert werden kann. Hierzu ist vorgesehen, daß zwischen dem elektronischen Terminplaner und dem anderen Gerät ein bidirektionaler Datenaustausch einrichtbar ist.

Nach einer sehr vorteilhaften Ausgestaltung der Erfindung ist das andere Gerät ein Navigationsgerät, wobei im anderen Gerät die im Kalendarium abgelegten Daten zur Routenbestimmung verwendbar sind.

Im Stand der Technik sind bereits Navigationsanordnungen zur Zielführung bekannt. Unabhängig davon, wie die bekannten Navigationssysteme organisiert sind, ist zur Zielführung notwendig, daß in irgendeiner Weise die jeweiligen Zieldaten dem Navigationssystem mitgeteilt werden, damit dieses ausgehend vom jeweiligen Standort die Route zum Ziel bestimmen und ausgeben kann. Um die Zieleingabe herkömmlicher Weise zu realisieren, werden fast ausschließlich manuelle Schaltmittel verwendet, die zur Eingabe von Zieldaten im Dialog mit einem Bildschirm stehen. Stellvertretend für solche Anordnungen wird auf die DE-A 199 27 280 und die US 5,825,360 hingewiesen.

Auch sind Anordnungen bekannt, die über eine Spracherkennungsanordnung verfügen und bei denen die Zieldatenerfassung sprachgesteuert wird. Abgesehen davon, daß sprachgesteuerte Systeme zur Erzielung brauchbarer Ergebisse derzeit immer noch einen hohen Aufwand erfordern, haben sowohl manuelle als auch sprachgesteuerte Systeme den Nachteil, daß zur Zieleingabe vom Nutzer immer noch eine relativ umfangreiche Tätigkeit verlangt wird. Nach der Erfindung ist es nunmehr möglich, die Eingabe von Zieldaten in das Navigationssystem durch Automatisierung auf ein nicht vermeidbares Maß zu reduzieren. Es lassen sich nämlich jetzt die einmal für einen Termin eingegebenen Daten, also die ortsbezogenen Termindaten, unmittelbar vom elektronischen Terminplaner zum Navigationssystem über die Schnittstellen übertragen, ohne daß eine umfangsreiche Eingabebehandlung notwendig ist. Das Navigationssystem kann also die im Kalendarium abgelegten Daten bei der Routenbestimmung zur Festlegung des Ziel- bzw. Terminorts in einfacher Weise nutzen, indem zum Beispiel die Adresse des Terminorts dem Navigationssystem übergeben wird.

Eine sehr komfortable Handhabung ist dann gegeben, wenn etwa eine Datei bzw. Adreßdatei vorhanden ist, in der unter der jeweiligen Individualbezeichnung der zugehörige Zielort bzw. die zugehörige Anschrift hinterlegt und eine Abgleichanordnung vorhanden ist, die anhand der in das Kalendarium eingeschriebenen Individualbezeichnung den zugehörigen Zielort bzw. die zugehörige Anschrift aus der Datei ermittelt. Wird als Individualbezeichnung wieder ein Name und/oder eine Telefonnummer verwendet, wird eine sehr benutzerfreundliche Bedienung erreicht.

Andererseits ist es beim elektronischen Terminplaner möglich, ihn durch das andere Gerät über die Schnittstellen zu steuern. Sind beispielsweise im elektronischen Terminplaner aufgrund gespeicherter Termine sogenannte Vortermine festgelegt worden, zu denen eine Abreise wünschenswert wäre, um den tatsächlichen Termin im Hinblick auf die Reisezeit einhalten zu können, so könnten durch das andere Gerät diese Vortermine verändert werden, und zwar im Hinblick auf Ereignisse, die die Reisezeit verändern könnten. Diese Ereignisse wären zum Beispiel wetterbedingte Ereignisse, Staus, Umleitungen, usw.. Das andere Gerät könnte in diesem Fall ein Serviceprovider sein, der über derartige Ereignisse laufend berichtet.

Die Kommunikation zwischen den Schnittstellen des elektronischen Terminplaners und des anderen Geräts kann über verschiedene geeignete Kanäle verlaufen, etwa über das Internet, über Funkkanäle oder leitungsgebundene Kanäle, und dergleichen.

Vorteilhafterweise können dabei der elektronische Terminplaner und das andere Gerät auch eine transportable Baueinheit bilden. Diese Baueinheit könnte zu einem Mobiltelefon ergänzt sein.

Die Erfindung wird nachfolgend unter Bezugnahme auf die Zeichnung näher beschrieben. Es zeigen:
**Figur 1** einen elektronischen Terminplaner, der über eine Luft-Schnittstelle mit einem anderen elektronischen Gerät in Kommunikationsverbindung steht; und
**Figur 2** elektronische Terminplaner nach der Erfindung in verschiedener Ausgestaltung, die über verschiedene Schnittstellen und auch über das Internet untereinander sowie mit einem Serviceprovider verbindbar sind.

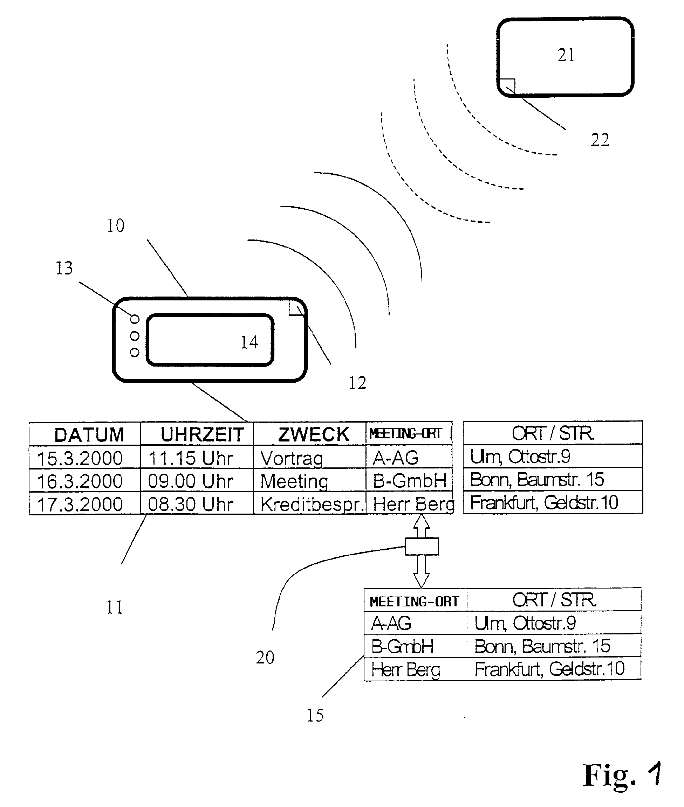

In der Figur 1 ist mit der Bezugsziffer 10 ein Terminplaner gezeigt. Dieser Terminplaner 10 umfaßt neben einem Kalendarium 11 auch eine Schnittstelle 12. Zur besseren Darstellung der Verhältnisse ist in der Figur 1 das Kalendarium 11 unterhalb des Terminplaners 10 vergrößert veranschaulicht. Deutlich ist der Darstellung des Kalendariums 11 entnehmbar, daß dieses im vorliegenden Fall vier Spalten (Datum, Uhrzeit, Zweck und Meeting-Ort) hat und über eine Mehrzahl von Zeilen verfügt, von denen allerdings nur vier gezeigt und bereits mit Terminen bzw. Terminangaben geschrieben sind. Nur der Vollständigkeit halber sei darauf hingewiesen, daß im gezeigten Ausführungsbeispiel die Spalte "Meeting-Ort" für die Aufnahme von Individualbezeichnungen i. S. dieser Anmeldung dient.

Der Terminplaner kann beispielsweise Bestandteil einer mobilen Kommunikationseinrichtung (Mobiltelefon) sein. Beispielhaft sei hier der Communicator NOKIA®9110 oder das Mobiltelefon NOKIA 6210 genannt, welche über die Möglichkeit verfügen, Kalendereinträge zu verwalten.

Die Eingabe eines neuen Termins ist vorliegend so organisiert, daß bei Betätigung eines entsprechenden Funktionsknopfes 13 am Terminplaner 10 dem Nutzer eine leere Zeit auf dem Display 14 des Terminplaners 10 zur Verfügung gestellt wird, die er dann entsprechend den Überschriften der Spalten mit Daten für seinen Termin auszufüllen hat. Für die Eingabe des Termins, welcher in der ersten in der Figur gezeigten Zeile veranschaulicht ist, hätte der Nutzer über eine Tastatur (nicht gezeigt) in der ersten Spalte den Eintrag 15.3.2000, in der zweiten Spalte den Eintrag 11.15, in der dritten Spalte den Eintrag "Vortrag" und in der vierten Spalte den Eintrag "A-AG" machen müssen. Auffällig ist, daß neben den eben genannten Einträgen vom Nutzer keine Angabe der Anschrift verlangt wird. Diese wird vielmehr dem jeweiligen Termineintrag dadurch beigestellt, daß eine Adreßdatei 15 im Terminplaner 10 vorhanden ist, die mit dem Kalendarium 11 über die Spalte Meeting-Ort verknüpft ist und über eine Abgleichanordnung 20 verfügt. Letztes ist mit dem Doppelpfeil in der Figur angedeutet. Diese Verknüpfung bewirkt, daß mit Eingabe des jeweiligen Meeting-Orts die für diesen Eintrag relevante Anschrift aus der Adreßdatei 15 herausgesucht und mit dem jeweiligen Termin verbunden wird. Für den in der ersten Zeile der Figur 1 eingetragenen Termin bedeutet dies, daß anhand des getätigten Eintrags in der Spalte Meeting-Ort "A-AG" die zugehörige Adresse "Ulm, Ottostrasse 9" aus der Adreßdatei 15, welche für diesen Zweck ebenfalls mit einer Spalte Meeting-Ort versehen ist, herausgesucht und mit dem Zeileneintrag im Kalendarium 11 verbunden wird. Ob dabei die anhand des Meeting-Orts ermittelte genaue Anschrift im Kalendarium 11 angezeigt wird oder nicht, ist für die Funktionsweise der Erfindung ohne Bedeutung. Wird sie allerdings angezeigt, kann dies für den Nutzer von Vorteil sein. Hat beispielsweise die A-AG mehrere Niederlassungen, kann der Nutzer, wenn ihm die Anschriften der Niederlassungen angezeigt werden, mit dem Eintrag gleichzeitig die Anschrift der Niederlassung der A-AG auswählen, die für seinen Termin relevant ist.

Nur der Vollständigkeit halber sei darauf hingewiesen, daß das Kalendarium 11 nicht notwendig über die Spalte Meeting-Ort mit der Adreßdatei 15 verbunden sein muß. Vielmehr kann in einem anderen - nicht dargestellten - Ausführungsbeispiel die jeweilige Anschrift aus der Adreßdatei 15 auch über eine ins Kalendarium 11 eingeschriebene Telefonnummer oder einen Personnennamen verknüpft sein, wenn anstelle der Spalten Meeting-Ort im Kalendarium 11 und der Adreßdatei 15 entsprechende Spalten vorgesehen werden.

Auch kann in einem einfachen - nicht dargestellten - Ausführungsbeispiel gänzlich auf eine Adreßdatei 15 verzichtet werden, wenn das Kalendarium 11 beispielsweise über die Spalten Ort und Straße verfügt. In diesem Fall ist es allerdings notwendig, daß der Nutzer zur Terminfestlegung auch die Anschrift des Terminorts nach Ort und Straße in das Kalendarium 11 einträgt.

Hat ein Nutzer die in der Figur 1 gezeigten Einträge getätigt, werden die jeweiligen Einträge an die Navigationsanordnung 21 übertragen. Zu diesem Zweck ist der Terminplaner 10 mit einer Schnittstelle 12 versehen, über welche er mit der Navigationsanordnung 21, die auch über eine Schnittstelle 22 verfügt, in Datenaustausch treten kann.

Auch wenn in dem gezeigten Ausführungsbeispiel der Figur 1 der Datenaustausch zwischen dem Terminplaner 10 und der Navigationsanordnung 21 über eine Luftstrecke erfolgt, kann in einem anderen - nicht dargestellten - Ausführungsbeispiel der Datenaustausch kabelgebunden erfolgen. Ist letztes realisiert, muß dann zum Datenaustausch lediglich eine körperliche Verbindung zwischen dem Terminplaner 10 und der Navigationanordnung 21 hergestellt werden, indem beispielsweise der Terminplaner 10 mit der Navigationsanordnung 21 über ein Kabel verbunden wird.

Der in der Figur 1 gezeigte und über eine Luftstrecke erfolgende Datenaustausch kann so realisiert sein, daß sowohl der Terminplaner 10 als auch die Navigationsanordnung 21 über ein GSM-Modul (nicht gezeigt) verfügen. Der Datenaustausch zwischen dem Terminplaner 10 und der Navigationseinrichtung 21 kann so organisiert sein, daß in festen oder einstellbaren Zeitintervallen eingetragene Termine an die Navigationseinrichtung 21 übertragen werden. Da die intervallmäßige Datenübertragung nicht nur kostspielig ist sondern auch Übertragungskapazitäten erfordert, kann vorgesehen sein, daß die Datenübertragung nur dann erfolgt, wenn ein neuer Termin in den Terminplaner 10 aufgenommen wurde.

Die Datenübertragung zwischen dem Terminplaner 10 und der Navigationseinrichtung 21 kann aber auch über eine Kabelverbindung oder über eine kabellose Funkverbindung kurzer Reichweite (zum Beispiel über den Bluetooth-Standard (HTTP: / /www.bluetooth.com) realisiert sein.

Sind aus dem Terminplaner 10 die Daten des Kalendariums 11 gemäß der Figur 1 an die Navigationanordnung 21 übertragen worden und startet dann der Nutzer am 15.3.2000 um 8:30 Uhr sein Fahrzeug, in dem die Navigationsanordnung 21 installiert ist, erhält er den Hinweis, daß um 11:15 Uhr ein Vortrag bei der A-AG in der Ottostrasse 9 in Ulm sein wird. Gleichzeitig mit dem Hinweis wird dem Nutzer die Frage gestellt, ob die Zielführung zu diesem Termin durchgeführt werden soll. Bestätigt der Nutzer diese Frage, wird ihm die Route ausgehend vom derzeitigen Standort nach Ulm in die Ottostrasse 9 angegeben.

Würde der Nutzer sein Fahrzeug aber schon am 14.3.2000 gegen 16:00 Uhr benutzen, würde dies bedeuten, daß in diesem Fall an ihn der Hinweis und die Frage entsprechend dem letzten Absatz ausgegeben würde. Um derart überflüssige Hinweise und Fragen weit im Vorfeld vor einem Termin auszuschließen, kann folgendes vorgesehen sein:

Wird anhand der momentanen Datums- und Uhrzeitwerte festgestellt, daß der nächste Termin außerhalb eines einstellbaren oder festen Zeitfensters liegt, wird die Ausgabe des Hinweises und der Frage unterdrückt. Weist beispielsweise das Zeitfenster einen Vorlauf von vier Stunden auf, so wird der Hinweis auf den Termin am 15.3.2000 um 11:15 Uhr und die verbundene Frage nach der Routenführung zum Termin erst dann ausgelöst, wenn das Fahrzeug ab 7:15 Uhr am 15.3.2000 gestartet wird. Folglich würde bei einer Nutzungszeit entsprechend den Angaben im letzten Absatz der Hinweis auf den Termin und die Frage nach der Routenführung unterdrückt.

Auch kann vorgesehen sein, daß Fahrzeuge, die außerhalb des Zeitfensters in Betrieb genommen wurden oder bei denen vor Fahrtantritt die Zielführungsfrage abgelehnt wurde, den Hinweis und die Zielführungsanfrage immer dann erhalten, wenn während der laufenden Fahrt der momentane Datums- und Zeitwert plus des Wertes für das Zeitfenster dem Zeitpunkt des nächsten Termins entspricht.

Wesentlich vorteilhafter als die Verwendung des einstellbaren oder fest vorgegebenen Zeitfensters ist es, wenn das Zeitfenster dynamisch ermittelt wird. Geht man davon aus, daß der momentane Standort des Fahrzeugs durch die bei Navigationsanordnungen 21 üblichen Positionsermittlungsmodule bekannt ist oder zumindest leicht ermittelt werden kann, kann aus diesem Wert und der Zielortangabe für den entsprechenden Termin die benötigte Fahrzeit bestimmt werden, indem beispielsweise das individuelle Fahrverhalten des Nutzers auf verschiedenen Straßentypen während der Vergangenheit ausgewertet wird und durch Betrachtung der zu nutzenden Straßentypen und der darauf zurückzulegenden Kilometer für die Bestimmung des Zeitfensters verwendet wird. Wird beispielsweise das Fahrzeug am 15.3.2000 um 8:00 Uhr in Karlsruhe in Betrieb genommen und wird für die Strecke von Karlsruhe nach Ulm zum Termin ein Zeitfenster von zwei Stunden ermittelt, erhält der Nutzer bei Fahrtantritt keinen Hinweis und keine Zielführungsfrage, es sei dann, daß er durch entsprechende Einstellungen vor Fahrtantritt immer solche Hinweise und Fragen haben möchte. Benutzt der Fahrer sein Fahrzeug am 15.3.2000 um 7:00 Uhr für eine Fahrt nach Mannheim und bewegt sich dabei vom Terminziel weg, erhält er, wenn er beispielsweise um 8:30 Uhr in Mannheim sein Fahrzeug erneut verwendet, den Hinweis auf den Termin um 11:15 Uhr verbunden mit der Zielführungsfrage. Letzteres ist darauf zurückzuführen, daß sich durch die Fahrt nach Mannheim die Fahrtzeit auf beispielsweise 2 Stunden erhöht hat und sich somit das Zeitfenster entsprechend vergrößert. Daß der Fahrer den Hinweis und die Zielführungsfrage aber schon um 8:30 Uhr und nicht erst um 8:45 Uhr erhält, ist darauf zurückzuführen, daß zumindest bei der dynamischen Ermittlung des Zeitfensters ein Sicherheitszuschlag in das ermittelte Zeitfenster eingerechnet werden sollte und bei einer Inbetriebnahme des Fahrzeugs innerhalb der Zeitspanne des Sicherheitszuschlages ein Hinweis und eine Zielführungsfrage ausgegeben wird. Eine sehr flexible Bestimmung des Sicherzeitszuschlages ist dann gegeben, wenn der Sicherheitszuschlag bei längeren Strecken im Vergleich zu kürzeren Strecken größer wird. Für das vorstehend erläuterte Ausführungsbeispiel bedeutet dies, daß für die 210 km von Mannheim nach Ulm beispielsweise der Sicherheitszuschlag 20 Minuten beträgt, so daß bei jeder Inbetriebnahme des Fahrzeugs zwischen 8:25 Uhr und 9:45 Uhr der Hinweis und die Zielführungsfrage ausgegeben wird. für eine Fahrtstrecke von 550 km und eine ermittelte Fahrzeit von 6,10 Stunden könnte der Sicherheitszuschlag beispielsweise 45 Minuten betragen.

Bei der Ermittlung der Fahrzeit ist es hilfreich, wenn das Navigationssystem 21 hierbei eventuell aktuelle Verkehrsverhältnisse auf der Strecke mit berücksichtigen kann. Die Verkehrsmeldungen kann das Navigationssystem 21 zum Beispiel über den Radio-Rundfunkempfänger beziehen oder durch eine Anfrage über ein zellulares Mobilfunknetz bei einem Dienstanbieter abfragen.

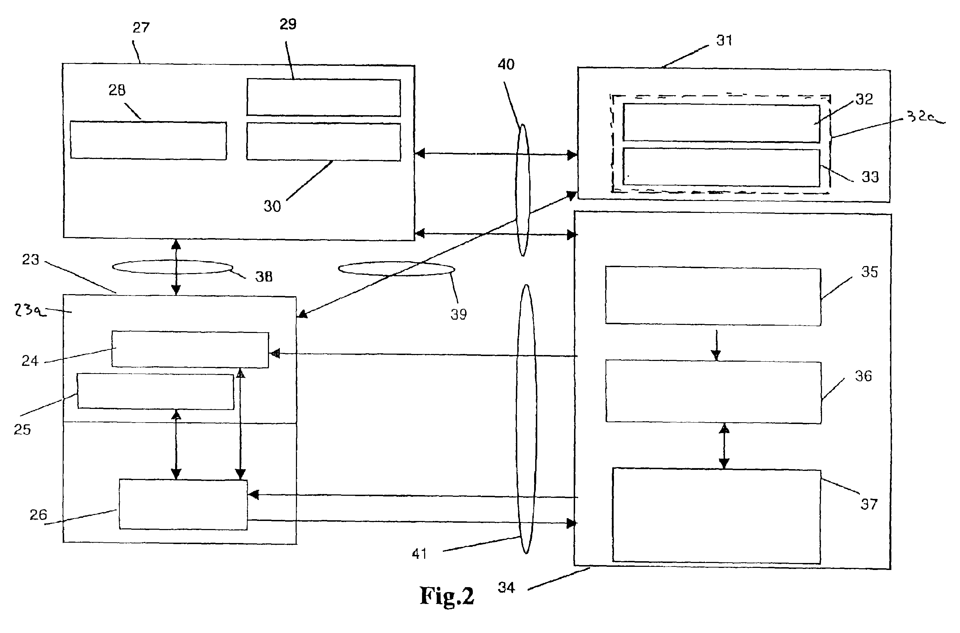

Anhand der Figur 2 wird ein weiteres Ausführungsbeispiel der Erfindung beschrieben, in dem Kalender- und Navigationsdaten über einen Serviceprovider, der beispielsweise über eine Internetverbindung zu erreichen ist, aufbereitet und abgeglichen werden. In Figur 2 sind die Blöcke mit folgenden Bezugszeichen versehen:
- 23: Mobile Kommunikationseinrichtung (zum Beispiel Mobiltelefon)
- 24: Lokaler Kalender/Mobiltelefon
- 25: Lokaler Adreßspeicher/Mobiltelefon
- 26: Navigationseinrichtung
- 27: Internet Portal
- 28: Globaler Routenspeicher
- 29: Globaler Kalender
- 30: Globaler Adreßspeicher
- 31: Personal Computer (PC)
- 32: Lokaler Kalender/PC
- 33: Lokaler Adreßspeicher/PC
- 34: Diensteanbieter
- 35: Verkehrsinformationsspeicher
- 36: Routenberechnungseinheit
- 37: Kundendatenspeicher
- 38: Funkverbindung (zum Beispiel GSM Mobilfunknetz)
- 39: Verbindung Mobiltelefon - PC (zum Beispiel Kabel, Infrarot, Bluetooth)
- 40: Internet-Verbindung (zum Beispiel Festnetz-Telefonverbindung)
- 41: Funkverbindung (zum Beispiel GSM Mobilfunknetz)

Die mobile Kommunikationseinrichtung 23 ist im einfachsten Fall ein Mobiltelefon, das einen elektronischen Terminplaner 23a und eine mit diesem in Kommunikationsverbindung stehende Navigationseinrichtung 26 enthält. In dem elektronischen Terminplaner 23a lassen sich Kalendereinträge in einem lokalen Kalender 24 speichern. Ferner verfügt der elektronische Terminplaner 23a über einen lokalen Adreßspeicher 25, in dem sich die Adressen von Kunden, Kollegen oder auch Firmen abspeichern lassen.

Das Mobiltelefon verfügt weiterhin über eine Navigationseinrichtung 26. Die Navigationseinrichtung 26 empfängt berechnete Routen von einem Diensteanbieter 24 und stellt bei der Fahrt zu einem Ziel auf einem Display die entsprechenden Navigationshinweise (Richtungspfeile) für den Fahrer zur Verfügung. Die Navigationshinweise können aber auch vom Mobiltelefon 23 innerhalb des Fahrzeuges an eine externe Anzeigeeinrichtung geleitet werden. Auch die Sprachausgabe von Richtungsanweisungen ist möglich. Die Navigationseinrichtung könnten aber auch selbst die Routen berechnen.

Das Mobiltelefon 23 steht über eine GSM-Funkverbindung (Global System for Mobile Communications) mit einem Internet Portal 27 in Verbindung. Das Internet Portal 27 kann einerseits die Verbindung zu einem Personal Computer 31 über eine Internet Verbindung 40 herstellen oder eine Verbindung zu einem Diensteanbieter 34 herstellen. Das Internet Portal 27 beinhaltet u. U. einen globalen Routenspeicher 28, auf dem Routen gespeichert werden, die der Diensteanbieter 34 zur Verfügung gestellt hat.

Ferner enthält das Internet Portal 27 einen globalen Kalender 29, der mit dem lokalen Kalender 24 des Mobiltelefons 23 und dem lokalen Kalender 32 des PC's 31 abgeglichen werden kann. Innerhalb des PC's 31 gehören der lokale Kalender 32 und eine lokaler Adreßspeicher 33 zu einem dort vorhandenen weiteren elektronischen Terminplaner 32a.

Ebenso kann der globale Adreßspeicher 30 des Internet Portals 27 mit dem lokalen Adreßspeicher 25 des Mobiltelefons 23 und dem lokalen Adreßspeicher 33 des PC's 31 abgeglichen werden.

Das Mobiltelefon 23 und der PC 31 befinden sich in der Regel im Besitz des Anwenders, d. h. er trägt das Mobiltelefon bei sich, um Kalender- und Adreßdaten immer bei sich zu haben und auf den neuesten Stand zu bringen. Ferner hat der Anwender beispielsweise an seinem Arbeitsplatz und/oder in seiner Wohnung fest installierte PC's 31 oder auch Laptops, mit denen sich eine Verbindung zum Internet Portal 27 über die Internet-Verbindung 40 herstellen läßt. Ferner kann der PC 31 über eine Kabel-, Infrarot- oder Funkschnittstelle (Bluetooth) 39 eine Verbindung zum Mobiltelefon 23 aufnehmen und die Kalender- und Adreßdaten direkt abgleichen.

Der Diensteanbieter 34 verfügt über einen Speicher für Verkehrsinformationen 35, der zum Beispiel über andere Diensteanbieter oder über eigene Quellen Verkehrsinformationen laufend sammelt und aktualisiert. Neben Verkehrsstaus können beispielsweise auch andere, eine Fahrt verzögernde Informationen (zum Beispiel Wetterverhältnisse) hier abgelegt werden.

Der Diensteanbieter 34 verfügt weiterhin über eine Routenberechnungseinheit. Die Routenberechnungseinheit 36 empfängt beispielsweise Kalendereinträge aus dem globalen Kalender 29 des Internet Portals 27 über eine Internet-Verbindung 40, sobald dort ein neuer Kalendereintrag abgespeichert wurde. Die Routenberechnungseinheit 36 hat ferner Zugriff auf den globalen Adreßspeicher 30 und kann von dort die zu einem Kalendereintrag gehörige Zielposition ermitteln. Weiterhin gibt es beim Diensteanbieter 34 einen Kundendatenspeicher 37, in dem geplante Routen, Internet-Portal-Adressen und Telefonnummern eines Kunden gespeichert sind.

Die Routenberechnungseinheit 36 verfügt nun über die geeigneten Daten (beispielsweise Besprechungszeit, Besprechungsort und aktuelle Verkehrsverhältnisse), um, basierend auf aktuellem Kartenmaterial, eine Route vom gegenwärtigen Standort des Mobiltelefons zum Zielort zu berechnen. Sollten Kalendereinträge für einen späteren Zeitraum vorgesehen sein, kann die Routenberechnungseinheit auch anhand der Kalendereinträge den Start- und Zielort bestimmen und eine Route vom Start- zum Zielpunkt berechnen. Aktuelle Verkehrsinformationen sind zu diesem Zeitpunkt aber noch nicht zu berücksichtigen.

Neben der Route, die zum Beispiel per SMS (Short Message Service) oder mittels einer anderen geeigneten Datenübertragungstechnik an das Mobiltelefon über die Schnittstelle 41 übermittelt wird, hat der Diensteanbieter 34 mittels der Routenberechnungseinheit 36 die Möglichkeit, die Fahrtzeit für eine berechnete Route abzuschätzen. Diese Fahrtzeitinformation wird sowohl dem Mobiltelefon 23 über die Schnittstelle 41 als auch dem Internet Portal 27 mitgeteilt.

Das Mobiltelefon 23 trägt diese Fahrtzeitinformation dann im lokalen Kalender 24 ein und das Internet Portal 27 trägt die Fahrtzeitinformation im globalen Kalender 29 ein. Sobald eine Verbindung zwischen PC 31 und Internet Portal 27 hergestellt wird, wird dann auch der lokale Kalender 32 des PC's auf den neuesten Stand gebracht.

Nähert sich die aktuelle Zeit der vorab abgeschätzten Abfahrtzeit, die in den Kalendern abgespeichert wurde, kann der Diensteanbieter anhand der im Speicher 35 abgelegten aktuellen Verkehrsinformation eine Neuberechnung der Route bzw. der damit verbundenen Fahrtzeit vornehmen. Sollte sich eine Abweichung gegenüber der ursprünglichen abgeschätzten Fahrtzeit ergeben, wird die neue Fahrtzeit dem Mobiltelefon 23 und dem Internet Portal 27 bzw. dem PC 31 mitgeteilt, damit der Anwender unter Umständen seine Fahrt bei ungünstigen Verkehrs- und Witterungsverhältnissen zu einem Termin früher beginnen kann.

Sollten die veränderten Verkehrsbedingungen auch eine Neuberechnung der Route erforderlich machen, ist es sinnvoll, daß der Diensteanbieter 34 dem Mobiltelefon 23 die neue Route automatisch mitteilt. Insofern ist es auch sinnvoll, daß der Diensteanbieter 34 die berechnete Route zunächst im Kundenspeicher 37 ablegt und die endgültige Route dem Anwender erst unmittelbar vor Fahrtantritt übermittelt.

Auf diese Art und Weise hat ein Anwender immer die Fahrtzeiten zu seinen Terminen unter Kontrolle und kann seine weiteren Termine unter Berücksichtigung der Fahrzeiten entsprechend planen und in die Kalender eintragen.

Abschließend sei noch bemerkt, daß das Telefon 23 auch über die Schnittstelle 41 direkt eine Routenanfrage von der Navigationseinrichtung 26 an den Diensteanbieter 34 machen kann.

## Patentansprüche

1. Elektronischer Terminplaner (10) mit einem Kalendarium (11), in welchem Termine mindestens nach Datum, Uhrzeit und einer Individualbezeichnung einstellbar sind, **dadurch gekennzeichnet, daß** der Terminplaner 10 mit einer Schnittstelle (12) versehen ist, die mit einer an einem anderen Gerät (21) vorhandenen Schnittstelle (22) bezüglich der Termindaten in Datenaustausch steht.

2. Elektronischer Terminplaner nach Anspruch 1, **dadurch gekennzeichnet, daß** der Datenaustausch bidirektional ist.

3. Elektronischer Terminplaner nach Anspruch 1 oder 2, **dadurch gekennzeichnet, daß** das andere Gerät (21) ein Navigationssystem ist und daß im anderen Gerät (21) die im Kalendarium (11) abgelegten Daten zur Routenbestimmung verwendbar sind.

4. Elektronischer Terminplaner nach Anspruch 1 oder 2, **dadurch gekennzeichnet, daß** das andere Gerät ein Serviceprovider ist.

5. Elektronischer Terminplaner nach Anspruch 1 oder 2, **dadurch gekennzeichnet, daß** das andere Gerät ein Personalcomputer ist.

6. Elektronischer Terminplaner nach Anspruch 1 oder 2, **dadurch gekennzeichnet, daß** das andere Gerät ein Mobiltelefon ist.

7. Elektronischer Terminplaner nach einem der Ansprüche 1 bis 6, **dadurch gekennzeichnet, daß** er und das andere Gerät über das Internet verbindbar sind.

8. Elektronischer Terminplaner nach einem der Ansprüche 1 bis 7, **dadurch gekennzeichnet, daß** er und das andere Gerät über eine drahtgebundene oder Luft-Schnittstelle verbindbar sind.

9. Elektronischer Terminplaner nach einem der Ansprüche 1 bis 8, **dadurch gekennzeichnet, daß** eine Datei (15) vorhanden ist, in der unter der jeweiligen Individualbezeichnung ein Zielort hinterlegt ist, und daß eine Abgleichanordnung (20) vorhanden ist, die anhand der in das Kalendarium eingeschriebenen Individualbezeichnung den zugehörigen Zielort aus der Datei (15) ermittelt.

10. Elektronischer Terminplaner nach Anspruch 9, **dadurch gekennzeichnet, daß** die Individualbezeichnung eine Name und/oder eine Telefonnummer ist.

11. Elektronischer Terminplaner nach Anspruch 3, **dadurch gekennzeichnet, daß** er zusammen mit dem Navigationssystem (21) in einer Baueinheit untergebracht ist.

12. Elektronischer Terminplaner nach Anspruch 11, **dadurch gekennzeichnet, daß** die Baueinheit ein Mobiltelefon ist.
